# EUROPÄISCHE PATENTSCHRIFT

(11) **EP 1 042 856 B1**
(45) Veröffentlichungstag und Bekanntmachung des Hinweises auf die Patenterteilung: **26.02.2003**
(21) Anmeldenummer: 98956804.3
(22) Anmeldetag: 30.09.1998
(51) Int. Cl.: H02K 11/04

(54) **ELEKTRISCHE MASCHINE, INSBESONDERE SCHLEIFRINGLOSER DREHSTROM-GENERATOR**
ELECTRIC MACHINE, ESPECIALLY A THREE-PHASE GENERATOR WITHOUT A SLIP RING
MACHINE ELECTRIQUE, NOTAMMENT ALTERNATEUR TRIPHASE SANS BAGUE COLLECTRICE

(30) Priorität: 30.09.1997 DE 29717416 U
(43) Veröffentlichungstag der Anmeldung: 11.10.2000
(73) Patentinhaber: ROBERT BOSCH GMBH, 70442 Stuttgart (DE)
(72) Erfinder: MILLER, Hans-Peter, D-70374 Stuttgart (DE); LECHNER, Jürgen, D-71735 Eberdingen (DE); PFLÜGER, Gerhard, D-71706 Markgröningen (DE); GOTTFRIED, Wolfgang, D-74182 Obersulm (DE); WOLF, Erich, D-71665 Vaihingen (DE); BRACHERT, Rainer, D-89423 Gundelfingen (DE); GRAY, Kevin, Rogerstone Newport NP1 OAD (GB); LENGENFELDER, Thomas, D-71229 Leonberg (DE)
(86) Internationale Anmeldenummer: DE9802911
(87) Internationale Veröffentlichungsnummer: WO99017430

(56) Entgegenhaltungen:
- EP-A- 0 751 609
- DE-A- 4 232 929
- PATENT ABSTRACTS OF JAPAN vol. 017, no. 566 (E-1446), 13. Oktober 1993 & JP 05 161295 A (HITACHI LTD), 25. Juni 1993
- PATENT ABSTRACTS OF JAPAN vol. 007, no. 166 (E-188), 21. Juli 1983 & JP 58 072358 A (HITACHI SEISAKUSHO KK), 30. April 1983

## Beschreibung

### Stand der Technik

Die Erfindung geht aus von einer elektrischen Maschine, insbesondere einem schleifringlosen Drehstrom-Generator der Leitstückläuferbauart nach der Gattung des Anspruchs 1. Bei einer bekannten, derartigen Lösung (US-PS 5,451,823) sind die PLUS- bzw. MINUS-Dioden einer Gleichrichter-Baueinheit jeweils auf einem Kühlkörper befestigt und mit einem Anschluß mit ihm elektrisch verbunden. Die Kühlkörper sind sandwichartig mit einer zwischengefügten Isolierplatte auf der Stirnfläche eines Lagerschilds für einen Drehstromgenerator befestigt. Diese Gleichrichter-Baueinheit wird durch Nieten zusammengehalten und mittels Schrauben am Drehstromgenerator befestigt. Zur Kühlung des oberen, bogenförmig ausgebildeten Kühlkörpers ist dieser im Bereich seines Innenumfangs mit einer Vielzahl nebeneinander angeordneter Kühlschlitze versehen, durch die ein axialer Kühlluftstrom stirnseitig von außen hindurch zu einem am Rotor des Generators befestigten Lüfter eingesogen wird. Die Kühlluft wird vom Lüfter in bekannter Weise durch Schlitze am Außenumfang des Lagerschilds radial nach außen geblasen.

Eine derartige Konstruktion ist verhältnismäßig aufwendig. Die für das Durchströmen der Kühlluft vorgesehenen Öffnungen im oberen Kühlkörper der Gleichrichter-Baueinheit haben relativ kleine Kühlflächen zur Wärmeabführung.

### Vorteile der Erfindung

Die erfindungsgemäße elektrische Maschine, insbesondere als schleifringloser Drehstrom-Generator der Leitstückläufer-Bauart hat durch die kennzeichnenden Merkmale des Anspruchs 1 den Vorteil, daß er bei außenliegender Wasserkühlung wesentlich einfacher in seinem Aufbau ist, daß die Leiterplatte und der mit ihr verbundene Kontaktring einfach gestaltet sind. Auch ist die Montage und die Zugänglichkeit zum Inneren des Generators relativ einfach.

Weitere Ausgestaltungen der Erfindung ergeben sich aus den Unteransprüchen, der nachfolgenden Beschreibung und Zeichnung.

### Zeichnung

Es zeigen
Figur 1 einen Längsschnitt durch einen wassergekühlten schleifringlosen Generator und Figur la den Schaltungsaufbau,
Figur 2 einen Kontaktring in Isometrieansicht,
Figur 3 den Kontaktring in Draufsicht,
Figur 4 den Kontaktring im Schnitt längs der Linie II-II nach Figur 3,
Figur 5 eine Leiterplatte in Isometrieansicht,
Figur 6 einen Lamellenständer im Schnitt,
Figur 7 eine Drehstromwicklung in Isometrieansicht vereinfacht.

### Beschreibung des Ausführungsbeispiels

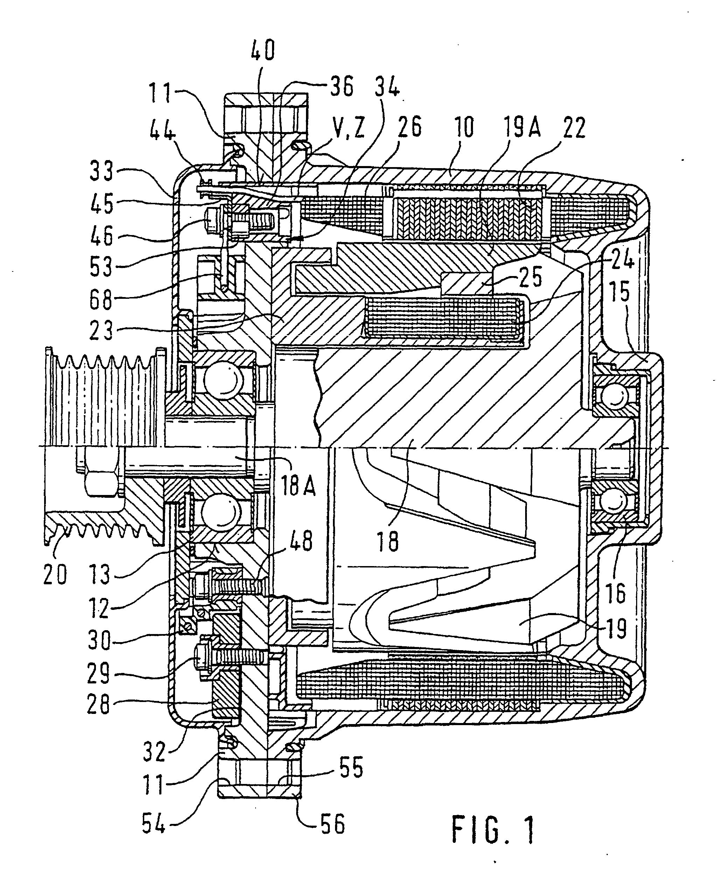

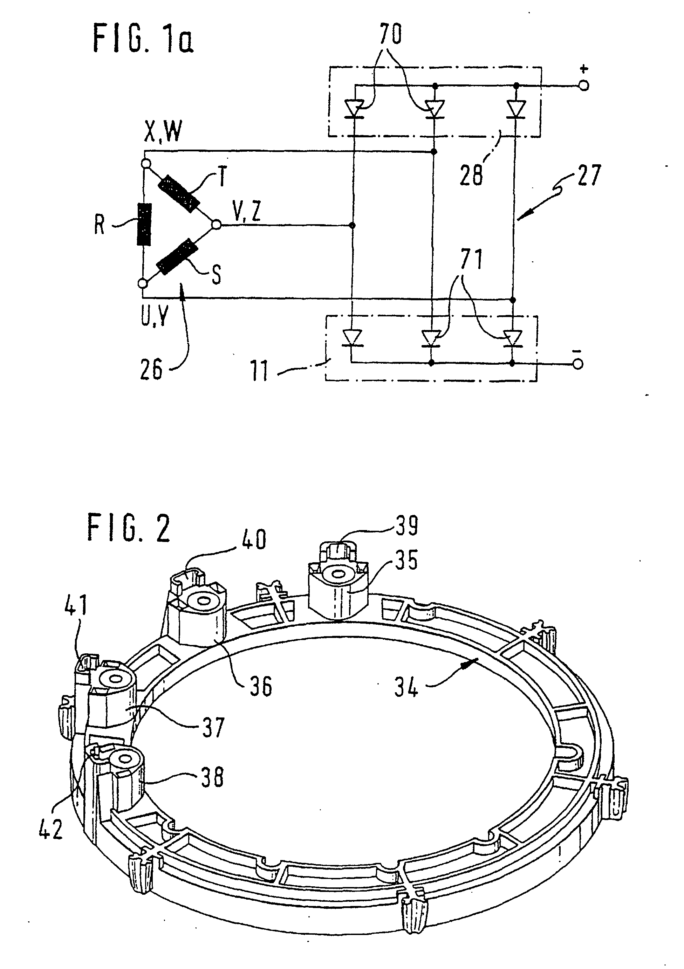

In Figur 1 ist mit 10 das etwa topfförmige Gehäuse eines schleifringlosen Drehstromgenerators bezeichnet, das durch ein Lagerschild 11 - auch als Minus-Kühlkörper bezeichnet - verschlossen ist. In einer mittigen Bohrung 12 des Lagerschilds ist ein Kugellager 13 angeordnet, in einer koaxial gegenüberliegenden Auswölbung 15 des Gehäuses ein Kugellager 16. In den beiden Kugellagern ist die Welle 18 eines Polrads 19 mit integriertem Leitstück 19A gelagert. Die Welle 18 hat einen aus dem Gehäuse 10 bzw. dem Lagerschild 11 hinausragenden Zapfen 18A, auf dem eine Riemenscheibe 20 angeordnet ist.

Etwa in der Mitte des Gehäuses 10 ist ein Lamellenständer 22 angeordnet und koaxial zur Welle 18 ein Polkern 23 mit feststehender Erregerwicklung 24. Das Leitstück 19A ist mit einem antimagnetischem Ring 25 zwischen Erregerwicklung 24 und Lamellenständer 22 fest verbunden. Die sogenannten Primär- und Sekundärluftspalte zwischen den genannten Teilen sind nicht weiter bezeichnet, da nicht erfindungswesentlich und im übrigen üblich.

Figur la zeigt den Schaltungsaufbau des Drehstromgenerators mit den Wicklungssträngen R, S, T der Drehstrom-Ständerwicklung 26 mit den Wicklungsenden U, V, W und X, Y, Z. Diese Enden sind in einer Dreieckschaltung miteinander verbunden und mit der Gleichrichterbaueinheit 27 eines Brückengleichrichters verschaltet. Die Plus-Gleichrichterdioden 70 sind dabei im Plus-Kühlkörper 28 und die Minus-Gleichrichterdioden 71 im Lagerschild 11 als Minus-Kühlkörper eingepreßt. In bekannter Weise sind dabei die Anoden der Plus-Dioden 70 zu einem Plus-Anschluß am Generator herausgeführt, während die Kathoden der Minus-Dioden 71 als Minus-Anschluß unmittelbar mit dem Lagerschild 11 kontaktiert sind.

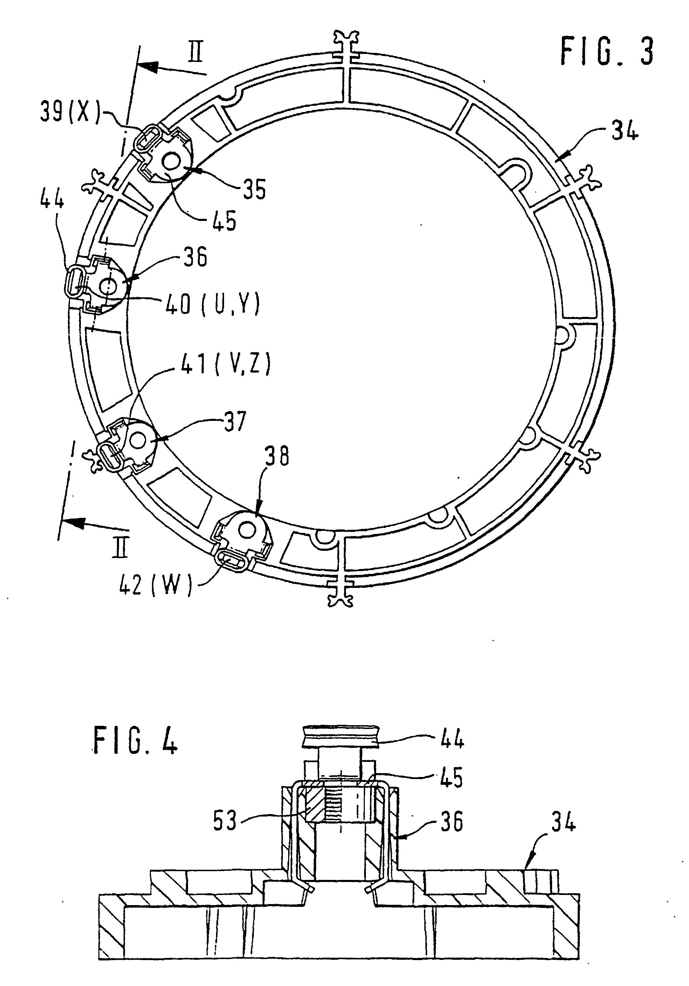

An das Lagerschild 11 (Minus-Kühlkörper) ist koaxial ein Plus-Kühlkörper 28 mit Hilfe von Schrauben 29 angeschraubt. Radial innerhalb des Plus-Kühlkörpers 28 befindet sich eine Leiterplatte 30, die mit Schrauben 48 am Lagerschild befestigt ist. Dazwischen befindet sich eine Isolierfolie 32. Es sei noch bemerkt, daß die Leiterplatte 30 häufig auch als Anschlußplatte bezeichnet wird. Die genannten Teile sind sandwichartig zueinander angeordnet und durch eine Schutzkappe 33 abgedeckt. Innerhalb der Schutzkappe 33 und konzentrisch radial außerhalb der Leiterplatte 30 befindet sich ein Kontaktring 34, der zusammen mit der Leiterplatte ein erfindungswesentliches Teil bildet. Er ist in Figur 2 in einer Isometrieansicht dargestellt, in Figur 3 in der Draufsicht, während die Figur 4 einen Schnitt längs II-II nach Figur 3 zeigt.

Auf der einen Hälfte des Kontaktrings 34 sind im Abstand voneinander vier stollenartige Anschlußstellen 35 bis 38 angeformt, in denen jeweils Durchgänge 39 bis 42 für die Wicklungsausgänge U, V, W, X, Y, Z der Drehstrom-Ständerwicklung 26 lösbar angeschlossen sind, und zwar in Klemmstellen 44 - siehe hierzu auch Figur 4. Da lediglich vier Anschlußstellen für sechs Wicklungsausgänge vorhanden sind, sind diese folgendermaßen angeordnet: Wicklungsausgang X und W sind einzeln herausgeführt an jeweils eine Anschlußstelle, hier 35 und 38, während die Wicklungsausgänge U und Y bzw. V und Z jeweils zusammengefaßt sind und beispielsweise an die Anschlußstellen 36 und 37 bzw. deren Klemmstellen 44 angeschlossen sind. Die entsprechenden Buchstaben X bis Z sind in Figur 3 an den jeweiligen Anschlußstellen angeschrieben. Damit erreicht man eine wesentliche Vereinfachung des Kontaktrings 34 und im Reparaturfall leichtes Lösen der Anschlüsse.

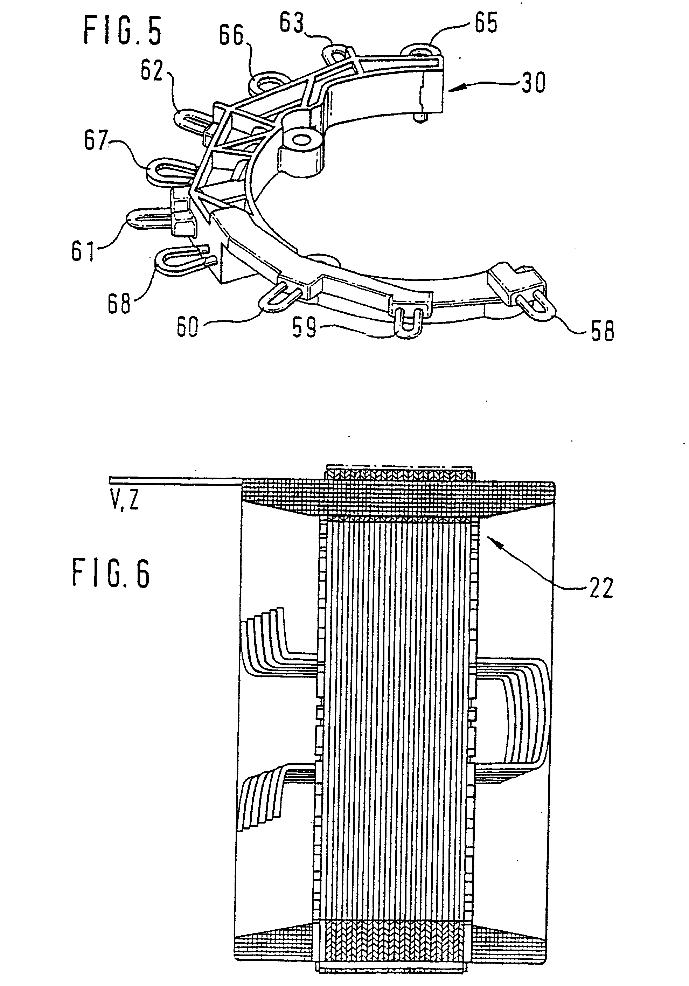

Wie die Figur 1 zeigt, sind die Klemmstellen 44 über Laschen 45 und Schrauben 46 festgeklemmt, von denen Leitungsdrähte zur Leiterplatte 30 führen. Diese ist mit Hilfe von Schrauben 48 an das Lagerschild bzw. den Minus-Kühlkörper 11 angeschlossen, in dem sich die nicht weiter dargestellten MINUS-Dioden 71 befinden, im Plus-Kühlkörper 28 befinden sich die PLUS-Dioden 70. An ihr sind Anschlüsse 58 bis 60 für die Plus-Dioden und Anschlüsse 61 bis 63 für die MINUS-Dioden der Leiterplatte 30 angebracht - siehe Figur 5. Außerdem sind dort vier Ständeranschlüsse 65 bis 68 zu erkennen, die über die Laschen 45 mit den Wicklungsausgängen U, V, W, X, Y, Z Kontakt sind, in dem sie mit den Schrauben 46 an den Laschen 45 festgeschraubt wurden. In Figur 1 ist der Wicklungsausgang V, Z zu erkennen.

Es wird noch auf die Figur 6 verwiesen, welche den Lamellenständer 22 mit seiner Wicklung 26 zeigt und einen Wicklungsausgang V, Z, wie er an die Klemmstellen 44 angeschlossen wird. Es sei noch erwähnt, daß gemäß Figur 4 die Muttern 53 für die Schrauben 46 in den Kontaktring 34 eingespritzt sind.

Es sei außerdem noch erwähnt, daß das Lagerschild 11 durch nicht dargestellte Schrauben an einem Flansch 56 des Gehäuses 10 angeschraubt ist. Durch Lösen dieser Schrauben kann das Lagerschild 11 abgenommen werden, so daß Zugang zum Kontaktring 34 möglich ist. Ähnliches gilt für den Kontaktring 34 selbst durch Lösen der Klemmstellen 44, so daß Reparaturarbeiten im Innern des Generators gut durchzuführen sind. Dort sind auch Durchgangsbohrungen 54, 55 zu erkennen, über welche der Generator durch ebenfalls nicht dargestellte Schrauben an die Brennkraftmaschine angeschlossen ist. Der Generator ist im übrigen nicht luftsondern wassergekühlt.

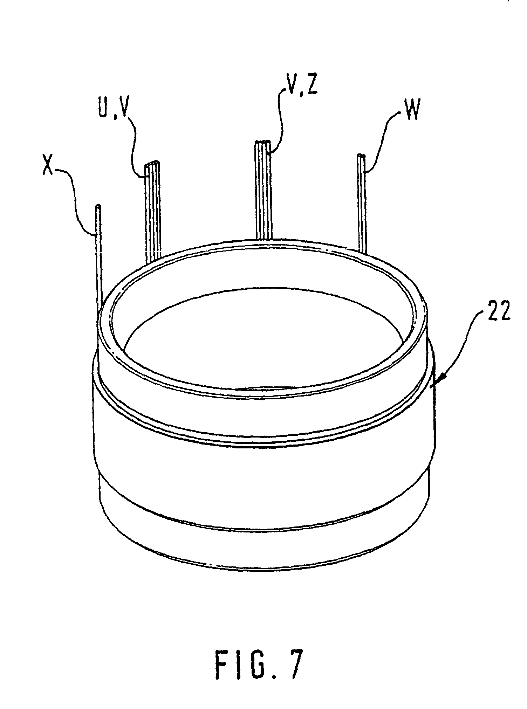

In Figur 7 ist der Lamellenständer 22 raumbildlich mit den Enden U, V, W und X, Y, Z der Drehstrom-Ständerwicklung 26 dargestellt. Da die Wicklungsstränge R, S, T in zwei Hälften gewickelt sind, bestehen die Wicklungsenden jeweils aus zwei Drähten.

## Patentansprüche

1. Elektrische Maschine, insbesondere schleifringloser Drehstrom-Generator der Leitstückläuferbauart, mit einem etwa topfförmigen Gehäuse (10), mit einer Gleichrichterbaueinheit bestehend aus einem Lagerschild (11), einem mit diesem verbundenen Plus-Kühlkörper (28), weiterhin mit einer ebenfalls am Lagerschild (11) angeordneten Leiterplatte (30), welche die Gleichrichterdioden (70, 71) mit den Anschlüssen der Drehstrom-Ständerwicklung (26) verbindet, **dadurch gekennzeichnet, daß** die Leiterplatte (30) über Anschlüsse (65 bis 68) mit einem Kontaktring (34) verbunden ist, an dem die Wicklungsausgänge (U, V, W, X, Y,Z) der Drehstromwicklung (26) eines Ständers (22) kontaktiert sind, wobei die Drehstromwicklung (26) drei im Dreieckschaltung angeordnete Wicklungsstränge R, S und T hat, die jeweils in zwei Hälften gewickelt sind, wobei der Kontaktring (34) konzentrisch um die Leiterplatte (30) herumführt und vier Anschlußstellen (35 bis 38) aufweist, an welche die Wicklungsausgänge (U bis Z) der Drehstromwicklung (26) derart herangeführt und angschlossen sind, daß an zwei der Anschlußstellen (36, 37) je zwei Enden (U, Y und V, Z) der Wicklungsstränge (R, S, T) zusammengeschaltet sind und an den zwei anderen Anschlußstellen (35, 38) je ein Ende (W, X) von zwei Wicklungssträngen (T und R) angeschlossen ist.

2. Maschine nach Anspruch 1, **dadurch gekennzeichnet, daß** an den Anschlußstellen (35 bis 38) Befestigungsmittel (46) angebracht sind, an welche sich Klemmstellen (44) für die Wicklungsausgänge anlegen.

3. Maschine nach Anspruch 1 oder 2, **dadurch gekennzeichnet, daß** sich an der Leiterplatte (30) Anschlüsse (58 bis 63) für im Pluskühlkörper (28) und im Lagerschild (11) angeordnete Dioden (70, 71) befinden, sowie Anschlüsse (65 bis 68) für den Kontaktring (34).

4. Maschine nach Anspruch 2 oder 3, **dadurch gekennzeichnet, daß** Teile der Befestigungsmittel im Kontaktring (34) eingesetzte Muttern (53) sind, in welche Schrauben (46) für die Anschlüsse (58 bis 63) der Leiterplatte (30) eingeschraubt sind.

## Claims

1. Electrical machine, in particular a three-phase alternator of the windingless rotor type without any sliprings, having a casing (10) which is approximately in the form of a pot, having a rectifier unit comprising an end frame (11), a positive heat sink (28) connected to it and, furthermore, a printed circuit board (30) which is likewise arranged on the end frame (11) and which connects the rectifier diodes (70, 71) to the connections of the three-phase stator winding (26), **characterized in that** the printed circuit board (30) is connected via connections (65 to 68) to a contact ring (34) with which the winding outputs (U, V, W, X, Y, Z) of the three-phase winding (26) on a stator (22) make contact, with the three-phase winding (26) having three delta-connected winding sections (R, S and T) which are each wound in two halves, with the contact ring (34) passing concentrically around the printed circuit board (30) and having four connecting points (35 to 38), to which the winding outputs (U to Z) of the three-phase winding (26) are routed and are connected, and **in that** two ends (U, Y and V, Z) of the winding sections (R, S, T) are in each case interconnected at two of the connecting points (36, 37), and one end (W, X) of in each case two winding sections (T and R) is connected to the two other connecting points (35, 38).

2. Machine according to Claim 1, **characterized in that** attachment means (46), on which clamping points (44) for the winding outputs rest, are fitted at the connecting points (35 to 38).

3. Machine according to Claim 1 or 2, **characterized in that** connections (58 to 63) for diodes (70, 71) which are arranged in the positive heat sink (28) and in the end frame (11) are located on the printed circuit board (30), as well as connections (65 to 68) for the contact ring (34).

4. Machine according to Claim 2 or 3, **characterized in that** parts of the attachment means are nuts (53) which are inserted in the contact ring (34), and into which screws (46) are screwed for the connections (58 to 63) of the printed circuit board (30).

## Revendications

1. Machine électrique notamment alternateur à courant triphasé sans collecteur du type à rotor à élément conducteur, comprenant un boîtier (10) en forme de pot, une unité de redresseur formée d'un panneau de palier (11), d'un corps de radiateur (28) de borne plus relié à ce panneau, ainsi que d'une plaque de circuit (30) également montée sur le panneau de palier (11) et reliant les diodes de redressement (70, 71) aux bornes de l'enroulement de stator (26) à courant triphasé,
**caractérisée en ce que**
la plaque de circuit (30) est reliée par des branchements (65-68) à une bague de contact (34) qui établit le contact avec les sorties d'enroulement (U, V, W, X, Y, Z) de l'enroulement à courant triphasé (26) du stator (22),
l'enroulement à courant triphasé (26) ayant trois branches d'enroulement (R, S, T) montées en triangle, ces branches d'enroulement étant chaque fois enroulées selon deux moitiés,
la bague de contact (34) passe concentriquement autour de la plaque de circuit (30) et comporte quatre points de branchement (35-38) auxquels arrivent et sont branchées les sorties d'enroulement (U...Z) de l'enroulement à courant triphasé (26),
et sur deux points de branchement (36, 37) on a réuni chaque fois deux extrémités (U, Y et V, Z) des branches d'enroulement (R, S, T) et aux deux autres points de branchement (35, 38) on a relié chaque fois une extrémité (W, X) de deux branches d'enroulement (T, R).

2. Machine selon la revendication 1,
**caractérisée par**
des moyens de fixation (46) prévus sur les points de branchement (35-38) auxquels sont appliqués les points de serrage (44) de sorties d'enroulement.

3. Machine selon l'une quelconque des revendications 1 ou 2,
**caractérisée en ce que**
la plaque de circuit (30) comporte des branchements (58-63) pour le corps de radiateur (28) de la borne plus et des diodes (70, 71) dans le panneau de palier (11) ainsi que des branchements (65-68) pour la bague de contact (34).

4. Machine selon l'une quelconque des revendications 2 ou 3,
**caractérisée en ce que**
les parties des moyens de fixation sont des écrous (53) intégrés dans la bague de contact (34), ces écrous recevant des vis (48) pour les branchements (58-63) de la plaque de circuit (30).
